# EUROPÄISCHE PATENTANMELDUNG

(11) **EP 0 863 044 A1**
(43) Veröffentlichungstag der Anmeldung: **09.09.1998**
(21) Anmeldenummer: 98103782.3
(22) Anmeldetag: 04.03.1998
(51) Int. Cl.: B60P 1/00, B60P 1/38

(54) **Transportvorrichtung**

(30) Priorität: 06.03.1997 DE 19709114
(71) Anmelder: Pape, Siegbert, 34369 Hofgeismar (DE)
(72) Erfinder: Pape, Siegbert, 34369 Hofgeismar (DE)
(74) Vertreter: WALTHER, WALTHER & HINZ Patentanwälte

(57) **Zusammenfassung**

Gegenstand der Erfindung ist eine Transportvorrichtung zum Einbau in den Laderaum eines PKW-Kombis, eines Pick-ups, eines Busses, eines Kleintransporters oder eines Anhängers. Zur Erhöhung der Ladekapazität eines Pkw's, Kleintransporters oder dergleichen, betreffend sensible Waren, insbesondere kalte Platten und zur Erleichterung des be- und entladens derartiger Platten wird ein Rahmen (12) vorgeschlagen, in dem eine Frontwalze (14) und eine Achterwalze (16) drehbar gelagert sind, wobei an der Front- (14) und der Achterwalze (16) ein Transportband (18) geführt ist, welches über einen Antrieb (24, 32) bewegbar ist.

## Beschreibung

Die vorliegende Erfindung betrifft eine Transportvorrichtung und ein Transportregal zum Einbau in den Laderaum eines Pkw-Kombis, eines Pick-ups, eines Busses, eines Kleintransportes oder eines Anhängers.

Beim Transport von großen und zerbrechlichen Waren, beispielsweise von vorbereiteten kalten Platten, in Töpfen befindlichen Gerichten, Salaten oder dergleichen für Büfetts mit dem Pkw, Kleintransporter oder dergleichen ergibt sich das Problem, daß nach dem Stellen von zwei oder drei Platten die Ladekapazität erschöpft ist. Dies hat zur Folge, daß man zur Auslieferung von einem kompletten kalten Büfetts mehrere Fahrzeuge benötigt oder mehrmals fahren muß.

Außerdem muß die sorgfältig angerichtete Platte mitunter mühsam und mit sehr viel Geschick an der richtigen Stelle im Laderaum plaziert werden. Häufig muß man dazu schon fast artistisch in das Fahrzeug hineinklettern, um nichts zu verschütten.

Davon ausgehend liegt der vorliegenden Erfindung die Aufgabe zugrunde, die Ladekapazität eines Pkw's, Kleintransporters oder dergleichen, betreffend sensible Waren, insbesondere kalte Platten, zu erhöhen und das be- und entladen mit derartigen Platten zu erleichtern.

Als technische Lösung dieser Aufgabe wird erfindungsgemäß vorgeschlagen, die Transportvorrichtung der eingangs genannten Art durch einen Rahmen, in dem eine Frontwalze und eine Achterwalze drehbar gelagert sind, weiterzubilden, wobei an der Front- und an der Achterwalze ein Transportband geführt ist, welches über einen Antrieb bewegbar ist.

Als weitere technische Lösung der erfindungsgemaßen Aufgabe wird vorgeschlagen, das Transportregal der eingangs genannten Art durch ein Rahmengestell weiterzubilden, in dem mehrere der vorgenannten Transportvorrichtungen gehalten sind.

Die erfindungsgemäße Transportvorrichtung wird auf die Ladefläche des Pkw-Kombis, des Pick-ups, des Busses, des Kleintransporters oder des Anhängers gestellt, wobei die Transportvorrichtung so ausgerichtet ist, daß die Transportwalze nahe der Ladekante angeordnet ist. Dabei ist die Transportvorrichtung vorzugsweise so dimensioniert, daß große Teile der Ladefläche abgedeckt sind.

Beim Beladen wird nun eine erste, kalte Platte im Bereich der Frontwalze auf das Transportband gelegt. Anschließend wird der Antrieb betätigt, so daß das Transportband die kalte Platte zur Achterwalze hin bewegt. Auf den so im Bereich der Frontwalze freigewordenen Platz kann nun eine weitere kalte Platte abgestellt werden, bevor das Transportband über den Antrieb betätigt wird. Dieser Vorgang kann so oft wiederholt werden, bis das Transportband voll belegt ist, oder bis sämtliche kalten Platten eingeladen sind.

Somit kann eine derart genutzte Transportvorrichtung sehr viel mehr zerbrechliche Güter, insbesondere kalte Platten aufnehmen, und erhöht damit die Ladekapazität des Fahrzeugs. Darüber hinaus kann die jeweilige kalte Platte in einfacher und bequemer Weise bis an die Ladekante herangefahren werden und von dort in einfacher Weise entnommen werden, so daß das mühselige Hereinklettern in das Fahrzeug entfällt.

Bei einem erfindungsgemäßen Transportregal, in dem mehrere der oben beschriebenen Transportvorrichtungen übereinander angeordnet sind, vervielfältigt sich der oben beschriebene Effekt, so daß hierdurch eine noch viel höhere Ladekapazität des Fahrzeugs erreicht wird.

In einer bevorzugten Weiterbildung ist der Rahmen als eine durchgehende Platte ausgebildet, in der die Frontwalze und/oder die Achterwalze eingelassen gehalten sind. Diese Platte bildet einen stabilisierenden Rahmen und die hält die Walzen zuverlässig. Außerdem bildet der vor der Frontwalze angeordnete Bereich einen Vortisch, auf der die zu transportierende Ware beim Ein- oder Aufladen kurzzeitig abgestützt werden kann. Im Bereich zwischen den beiden Walzen verhindert die durchgehende Platte ein zu großes Durchhängen des Transportbandes und gewährleistet somit, daß die zu transportierenden Teller, Schüsseln oder dergleichen umkippen bzw. auslaufen.

Die Stabilisierung des Transportbandes wird durch an der Platte angebrachte Stützrollen weiter erhöht, durch die ein Durchhängen des Transportbandes weiter verhindert wird.

In einer bevorzugten Weiterbildung der erfindungsgemäßen Transportvorrichtung ist das Transportband um die Front- und die Achterwalze umlaufend ausgebildet und weist auf seiner Unterseite einen Verschluß auf. Durch dieses quasi endlose Transportband ist die Vor- und Zurückbewegung in einfacher Weise zu realisieren. Sollte das Transportband einmal gründlich gereinigt werden müssen oder durch ein neues ausgetauscht werden müssen, so kann der auf der Unterseite vorgesehene Verschluß in einerfacher Weise geöffnet und das Transportband entfernt werden.

Um ein übermäßiges Durchhängen des Transportbandes zu verhindern, wird dieses mit einer nahe der Frontwalze angebrachten Spannrolle gespannt.

In einer bevorzugten Ausführungsform der erfindungsgemäßen Transportvorrichtung ist das Transportband aus einem 0,5 mm bis 5 mm, vorzugsweise 1 mm bis 2 mm dickem Gummi- oder Kunststoffband hergestellt. Hierdurch ist gewährleistet, daß sich das Transportband elastisch um die beiden Walzen herumlegen läßt und durch die angetriebene Frontwalze kraftschlüssig hin- und herbewegen läßt. Außerdem läßt sich das Gummi- oder Kunststoffband in einfacher Weise reinigen.

In einer anderen, bevorzugten Ausführungsform ist an der Frontwalze ein Elektromotor oder ein Kurbelbetrieb vorgesehen, mittels dem das Transportband vor- und zurück bewegt werden kann. Dies erhöht die einfache Handhabung der Transportvorrichtung von außerhalb des Fahrzeuges.

Zur Reduzierung der Baugröße der Transportvorrichtung, ist der Elektromotor in einer bevorzugten Weiterbildung innerhalb der Frontwalze angeordnet.

In einer bevorzugten Weiterbildung des erfindungsgemäßen Transportregals ist am Rahmengestell ein Stromkabel montiert, welches im Rahmengestell integrierte Steckverbindungen mit dem Fahrzuegstromsystem verbindet. Hierdurch wird jede Etage des Rahmengestells separat mit Strom versorgt, so daß jede Transportvorrichtung unabhängig von den anderen betätigt werden kann.

In einer bevorzugten Weiterbildung des erfindungsgemäßen Transportregals sind am Rahmengestell Arretiernippel zum Einrasten der Transportvorrichtung vorgesehen, so daß letztere während der Fahrt nicht verrutschen kann.

Weitere Vorteile der erfindungsgemäßen Transportvorrichtung und des erfindungsgemäßen Transportregals ergeben sich aus der Beschreibung und aus der beigefügten Zeichnung. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. In der Zeichnung ist ein Ausführungsbeispiel eines erfindungsgemäßen Transportregals mit erfindungsgemäßen Transportvorrichtungen dargestellt, anhand dessen die Erfindung näher erläuter wird. Es zeigen:
- Figur 1: eine Draufsicht auf eine erfindungsgemäße Transportvorrichtung;
- Figur 2: eine Seitenansicht der Transportvorrichtung gemäß Figur 1;
- Figur 3: eine geschnitten dargestellte Seitenansicht des Verschlusses der Transportvorrichtung gemäß Figur 1;
- Figur 4: eine perspektivische Ansicht der Transportvorrichtung gemäß Figur 1;
- Figur 5: eine perspektivische Ansicht eines erfindungsgemäßen Transportregals.

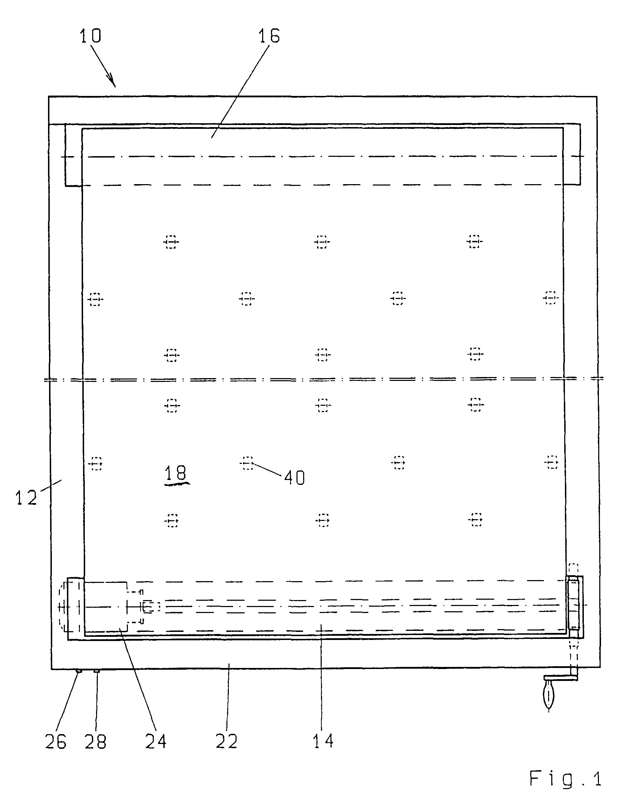

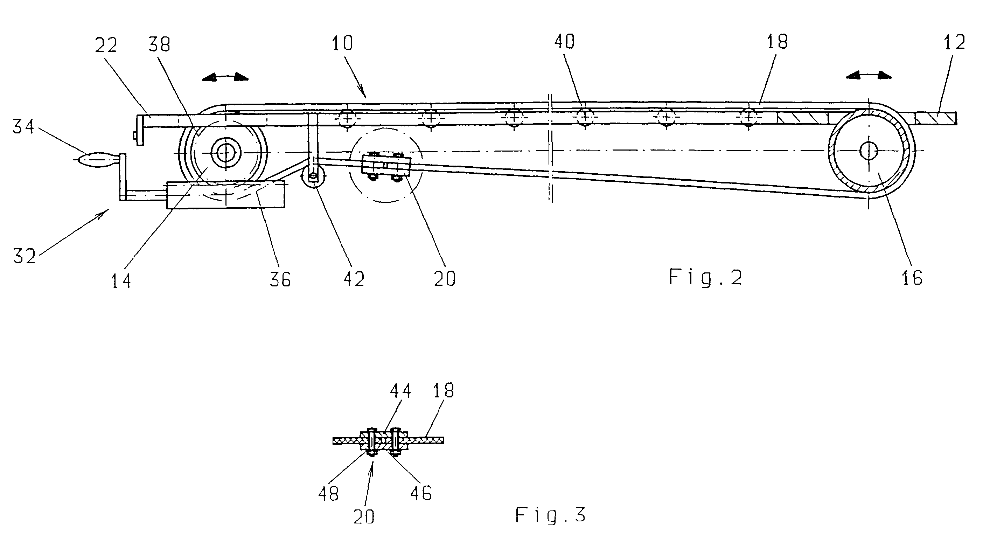

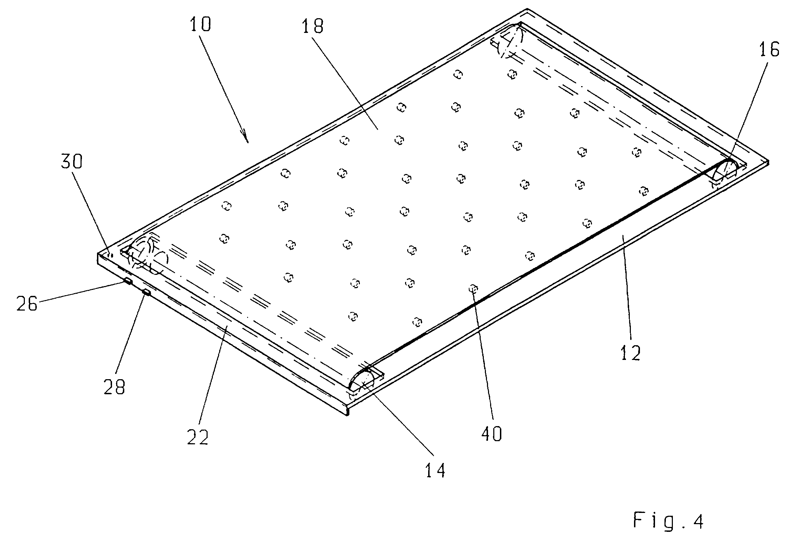

In den Figuren 1 bis 4 ist eine erfindungsgemäße Transportvorrichtung 10 dargestellt, die einen auf einer Platte gebildeten Rahmen 12, je eine drehbar in dem Rahmen gelagerte Frontwalze 14 und Achterwalze 16, sowie ein quasi endlos um die Frontwalze 14 und die Achterwalze 16 umlaufendes Transportband 18 umfaßt. Im Bereich der Unterseite der Transportvorrichtung 10 ist im Transportband 18 ein Verschluß 20 vorgesehen, der die beiden freien Enden des Transportbandes 18 miteinander verbindet, so daß ein quasi endlos umlaufendes Transportband 18 entsteht.

Der Rahmen 12 ist aus einer massiven Platte gebildet und weist im Bereich der Front- 14 und der Achterwalze 16 entsprechende Aussparungen auf. Dabei ist die Aussparung für die Frontwalze 14 etwa 5 cm bis 10 cm von der Vorderkante des Rahmens 12 entfernt, während die Aussparung für die Achterwalze 16 ebenfalls etwa 5 cm bis 10 cm von der Hinterkante des Rahmens 12 entfernt ist. Hierdurch ist ein Vortisch 22 geschaffen, auf den die Ware beim Be- und Entladen kurzseitig abgestützt werden kann.

Um das Transportband 18 in der gewünschten Weise vor und zurück zu bewegen, ist im Inneren der Frontwalze 14 ein Elektromotor 24 integriert, dessen Welle koaxial zur Frontwalze 14 angeordnet ist. Zur Bedienung des Elektromotors 24 ist an der Vorderkante des Rahmens 12 ein Vor-Schalter 26 und ein Zurück-Schalter 28 angebracht. Über einen am Rahmen 12 angebrachten Pin 30, der in eine entsprechende, am Rahmengestell angebrachte Steckverbindung eingeführt wird, wird der Elektromotor 24 mit Strom versorgt.

Zusätzlich zum Elektromotor 24 ist an der dem Elektromotor 24 gegenüberliegenden Seite der Frontwalze 14 ein Kurbeltrieb 32 angebracht, mit dem die Frontwalze 14 und somit das Transportband 18 manuell bedient werden kann. Dieser Kurbeltrieb 32 weist neben einer Handkurbel 34 eine Spindel 36 auf, welche in einen an der Frontwalze 14 angebrachten Zahnkranz 38 eingreift.

Zur Abstützung des etwa 2 mm dicken, aus Gummi hergestellten Transportbandes 18 sind an dem plattenförmigen Rahmen 12 mehrere Stützrollen 40 angebracht. Darüber hinaus ist nahe der Frontwalze 14 eine Spannrolle 42 vorgesehen, die das Transportband 18 stramm spannt. Durch die Stützrollen 40 und die Spannrolle 42 wird eine annähernd ebene Oberfläche des Transportbandes erreicht, auch wenn vergleichsweise schwere Töpfe oder Suppenschüsseln darauf stehen.

In einer anderen, nicht dargestellten Ausführungsform ist der plattenförmige Rahmen 12 direkt unter dem oberen Teil des Transportbandes 18 angeordnet, und bildet so eine Abstützung für schwere Gegenstände.

Der an der Unterseite des Transportbandes 18 angebrachte Verschluß setzt sich aus einem Ober- 44 und einem Unterteil 46 zusammen, welche durch mehrere Schrauben 48 zusammengehalten werden. In diesem Verschluß 20 werden die freien Enden des Transportbandes eingeklemmt und zusammengehalten, so daß ein quasi endloses Transportband 18 entsteht.

Allerdings kann dieses Transportband nicht vollständig um die Front- 14 und Achterwalze 18 umlaufen, da der Verschluß 20 nicht an der Spannrolle 42 bzw. an der Achterwalze 16 vorbeikommt, jedoch ist die Bewegungsmöglichkeit des Transportbandes 18 ausreichend, um auch nahe der Achterwalze 16 abgestellte Gegenstände bis zur Vorderkante des Rahmens 12 vorzuholen.

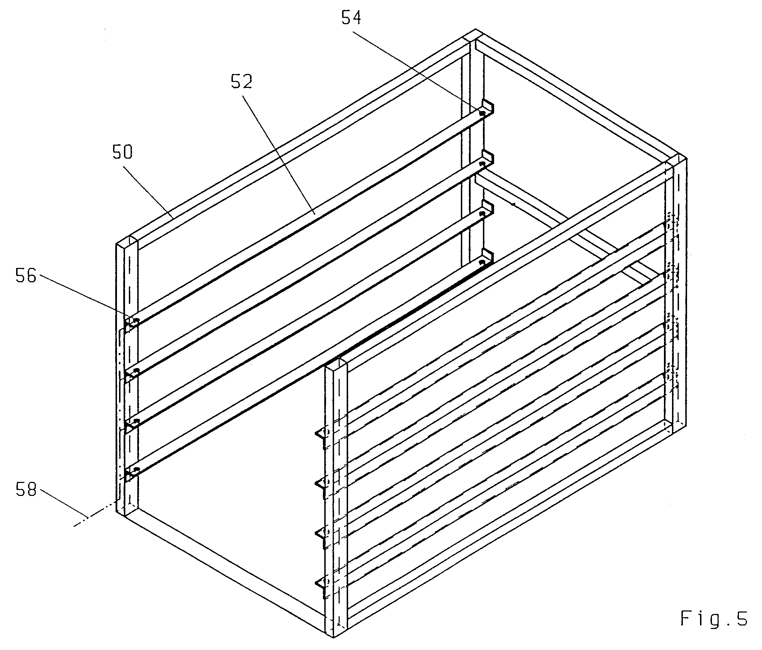

In Figur 5 ist ein erfindungsgemäßes Rahmengestell 50 dargestellt, in welches vier der zuvor beschriebenen Transportvorrichtungen 10 eingeschoben werden können. Zur Arretierung sind am hinteren Ende der Gleitschienen 52 des Rahmengestells 50 Arretiernippel 54 vorgesehen, die die Hinterkante des Rahmens 12 hintergreifen und ein Verrutschen der Transportvorrichtung 10 verhindern. Im vorderen Bereich der Gleitschiene 52 ist eine Steckverbindung 56 vorgesehen, die über entsprechende Stromkabel 58 mit dem Stromsystem des Fahrzeugs verbindbar sind. Das hier dargestellte Rahmengestell kann auch größer oder kleiner ausgeführt werden, um entsprechend mehr Transportvorrichtungen 10 aufzunehmen.

Auch ist es möglich, an der Transportvorrichtung 10 gemäß den Figuren 1 bis 4 Füßchen anzubringen, so daß diese Transportvorrichtung 10 einzeln einsetzbar ist.

Das hier dargestellte Transportregal 50 wird in die Ladefläche eines Pkw-Kombis, eines Pick-ups, eines Kleintransportes oder eines Anhängers hineingestellt und anschließend mit der gewünschten Anzahl von Transportvorrichtungen 10 bestückt. Zum Beladen wird die in der Küche vorbereitete kalte Platte im Bereich der Frontwalze 14 auf das Transportband 18 der Transportvorrichtung 10 aufgestellt und mittels des Elektromotors 24 oder des Kurbeltriebs 32 in den hinteren Bereich der Ladefläche verfahren. Sobald der Bereich der Frontwalze 14 wieder frei ist, kann hier eine weitere Platte bzw. ein weiterer Topf aufgestellt werden usw.. Beim Entladen geht man dann in umgekehrter Reihenfolge vor.

### Bezugszeichenliste:

- 10: Transportvorrichtung
- 12: Rahmen
- 14: Frontwalze
- 16: Achterwalze
- 18: Transportband
- 20: Verschluß
- 22: Vortisch
- 24: Elektromotor
- 26: Vor-Schalter
- 28: Zurück-Schalter
- 30: Pin
- 32: Kurbeltrieb
- 34: Handkurbel
- 36: Spindel
- 38: Zahnkranz
- 40: Stützrolle
- 42: Spannrolle
- 46: Unterteil
- 44: Oberteil
- 48: Schraube
- 50: Rahmengestell
- 52: Gleitschiene
- 54: Nippel
- 56: Steckverbindung
- 58: Stromkabel

## Patentansprüche

1. Transportvorrichtung zum Einbau in den Laderaum eines PKW-Kombis, eines Pick-ups, eines Busses, eines Kleintransporters oder eines Anhängers,
**gekennzeichnet durch**
einen Rahmen (12), in dem eine Frontwalze (14) und eine Achterwalze (16) drehbar gelagert sind, wobei an der Front- (14) und der Achterwalze (16) ein Transportband (18) geführt ist, welches über einen Antrieb (24, 32) bewegbar ist.

2. Transportvorrichtung nach Anspruch 1,
**dadurch gekennzeichnet**,
daß der Rahmen (12) als eine durchgehende Platte ausgebildet ist, in der die Frontwalze (14) und/oder die Achterwalze (16) eingelassen gehalten sind.

3. Transportvorrichtung nach Anspruch 2,
**dadurch gekennzeichnet**,
daß an der Platte mehrere Stützrollen (40) angebracht sind.

4. Transportvorrichtung nach wenigstens einem der vorangehenden Ansprüche,
**dadurch gekennzeichnet**,
daß das Transportband (10) um die Front- (14) und die Achterwalze (16) umlaufend ausgebildet ist und auf seiner Unterseite einen Verschluß (20) aufweist.

5. Transportvorrichtung nach Anspruch 4,
**dadurch gekennzeichnet**,
daß nahe der Frontwalze (14) eine Spannrolle (42) zum Spannen des Transportbandes (18) angebracht ist.

6. Transportvorrichtung nach wenigstens einem der vorangehenden Ansprüche,
**dadurch gekennzeichnet**,
daß das Transportband (18) aus einem 0,5 mm bis 5 mm, vorzugsweise 1 mm bis 2 mm, dickem Gummi- oder Kunststoffband ist.

7. Transportvorrichtung nach wenigstens einem der vorangehenden Ansprüche,
**dadurch gekennzeichnet**,
daß an der Frontwalze (14) ein Elektromotor (24) oder ein Kurbeltrieb (32) angreift, um diese vor- und zurück zu bewegen.

8. Transportvorrichtung nach Anspruch 7,
**dadurch gekennzeichnet**,
daß der Elektromotor (24) innerhalb der Frontwalze (14) angeordnet ist.

9. Transportregal zum Einbau in den Laderaum eines PKW-Kombis, eines Pick-ups, eines Kleintransporters oder eines Anhängers,
**gekennzeichnet durch**
ein Rahmengestell (50), in dem mehrere, vorzugsweise vier, Transportvorrichtungen gemäß wenigstens einem der vorangehenden Ansprüche gehalten sind.

10. Transportregal nach Anspruch 9,
**dadurch gekennzeichnet**,
daß am Rahmengestell (50) ein Stromkabel (58) vorgesehen ist, welches im Rahmengestell (50) integrierte Steckverbindungen (56) mit dem Fahrzeugstromsystem verbindet.

11. Transportregal nach wenigstens einem der Ansprüche 9 bis 10,
**dadurch gekennzeichnet**,
daß am Rahmengestell (50) Arretiernippel (54) zum Einrasten der Transportvorrichtung (10) vorgesehen sind.
